# NEW EUROPEAN PATENT SPECIFICATION

(11) **EP 2 175 588 B2**
(45) Date of publication and mention of the opposition decision: **08.01.2014**
(45) Mention of the grant of the patent: 25.08.2010
(21) Application number: 08017890.8
(22) Date of filing: 13.10.2008
(51) Int. Cl.: H04L 12/14, H04L 29/08

(54) **A method and system for charging control in telecommunications services**
Verfahren und System zur Steurung der Abrechnung in Telekommunikationsdiensten
Procédé et système de chargement de contrôle dans des services de télécommunications

(43) Date of publication of application: 14.04.2010
(73) Proprietor: Openet Telecom Limited, Dublin 12 (IE)
(72) Inventor: Hogan, Joe, Co Dublin (IE); McNamee, Alan, Dublin 9 (IE)
(74) Representative: Brophy, David Timothy

(56) References cited:
- EP-A1- 1 777 871
- EP-A1- 2 192 718
- WO-A-2004/100384
- WO-A1-2004/036825
- CN-A- 101 110 681
- US-A- 2007 207 818
- US-A1- 2008 034 080
- DATABASE 3GPP TS 23.125 V6.8.0 3 GPP '3rd Generation Partnership Project; Technical Specification Group Services and System Aspects; Overall high level functionality and architecture impacts of flow based charging'

## Description

This invention relates to a method and system for charging control in telecommunications services.

### BACKGROUND OF THE INVENTION

Policy and charging control methods employed in current systems involve receiving connect requests for a subscriber from a gateway, querying a database to determine policy regulations associated with the subscriber, and provisioning the gateway with the policy regulations. Subsequently, upon receiving an authorisation request from the gateway to allow a subscriber to access an application, the method further involves querying a database to ascertain charging information associated with the subscriber, consulting the charging information to determine whether authorisation should be permitted or denied, and informing the gateway accordingly.

In many systems, a cache is provided for storing at least a portion of the charging information pertinent to the subscriber such that if a subsequent authorisation request is received on behalf of the subscriber, the cache may be queried as opposed to the database, thereby reducing the latency associated with the request.

For example, consider the case where the subscriber has a pre-paid credit account. On receipt of the policy regulations for the subscriber, the gateway requests authorisation for the subscriber to access an application. The system queries a database to determine charging information for the subscriber and determines that the subscriber has €5 credit. Based on the application the subscriber wishes to access, for example, a text messaging facility, the system predicts that the subscriber is unlikely to spend in excess of €0.50 and as such fills the cache with €0.50. Subsequent authorisation requests are processed by accessing the cache to determine the credit available and deducting the amount accordingly. Only if the subscriber uses in excess of €0.50 will the system need to query the database. In this way, the latency introduced by the authorisation requests is reduced.

WO 2004/100384 discloses a content provisioning platform arranged to receive content from a content provider, and to deliver content to a subscriber in accordance with a set of rules, such as eligibility, age etc, as stored in a rules engine. When a rule is activated, and it's condition met, an action is issued by an actions handler. An example of such an action is to charge a subscriber a fee associated with the provision of content. The content provisioning platform further comprises a charging module arranged to determine a price for the provision of content, in accordance with the rules provided in the rules engine, A charge/call data record, CDR builder is utilised to produce a CDR, which is subsequently transmitted by a CDR transmitter to an external billing system.

It is an object of the present invention is to provide a more effective method for online charging of telecommunications services in particular providing improved latency in response to a request for a service.

### SUMMARY OF THE INVENTION

Accordingly, the present invention provides a method for charging control in a communications network, as claimed in claim 1.

Preferably, said providing a stimulus to a control system comprises sending a subscriber identifier to said control system.

Preferably, said step of retrieving subscriber information comprises pre-fetching charging information associated with the subscriber identifier from a database.

Preferably, the method further comprises the step of; at said policy manager retrieving policy information from a database, composing policy regulations for said subscriber and provisioning said policy regulations.

Preferably, the method further comprises the step of: at the policy manager, responsive to a notification from an application server, adapting said policy regulations associated with said subscriber,

Alternatively, the method further comprises the step of: at the policy manager, responsive to a notification from an application server, querying said subscriber information, responsive to said notification complying with subscriber information, adapting said policy regulations accordingly.

Preferably, said policy information comprises roaming preferences, network preferences, content filtering, charging class, quality of service (QoS) attributes, permitted services and/or online charging control.

The present invention further provides a system for charging control in a communications network, as claimed in claim 8,

Preferably, said control system further comprises a balance manager arranged to store said subscriber information.

Alternatively, said system further comprises a database in communication with said control system and said policy manager and which is arranged to store subscriber information

### BRIEF DESCRIPTION OF THE DRAWINGS

Embodiments of the invention will now be described, by way of example, with reference to the accompanying drawings, in which:
Fig. 1 illustrates a policy and charging control system according to a preferred embodiment of the present invention;
Fig. 2 illustrates an access gateway initiated message flow according to the preferred embodiment of the present invention; and
Fig. 3 illustrates an application server initiated message flow according to the preferred embodiment of the present invention.

### DETAILED DESCRIPTION OF THE INVENTION

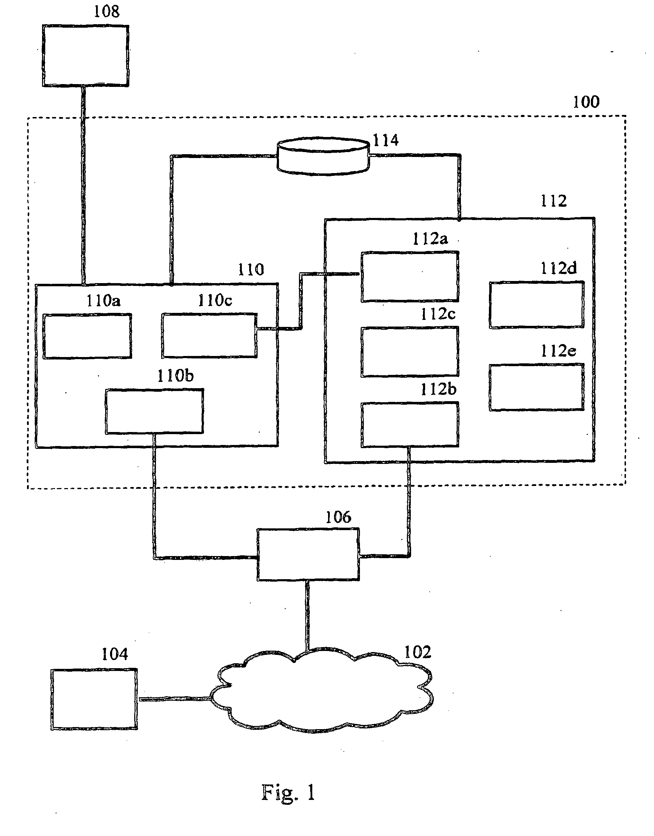

Referring to Fig. 1, there is illustrated a communications network comprising a policy and charging control system 100 according to a preferred embodiment of the present invention. The system 100 is arranged to allow users at a user terminal 104 to connect and access applications in accordance with subscriber policy and charging controls associated with the user or user terminal.

An access network 102 for example, 3GPP, 3GPP2, DOCSIS, or WiMAX is provided to connect a user at a terminal having IP enabled equipment 104, for example, a mobile phone, a PDA, a PC, or a set top box, to the network via an access gateway 106 to access applications provided by applications server 108.

As illustrated in Fig. 1, the system 100 comprises a policy manager 110 connected to a charging system 112. In the preferred embodiment, the policy manager 110 and charging system 112 are connected to a subscriber database 114. However, in an alternative embodiment, instead of database 114 common to both the policy manager and the charging system, the policy manager 110 is connected to a policy database and the charging system 112 is connected to a charging database, the policy database being separate from the charging database.

The database 114 is an entity in an operator's charging domain and comprises subscriber related information required to personalise policy regulations. For example, the subscriber related information may comprise subscriber policy limitations such as roaming preferences, network preferences, content filtering, charging class, quality of service (QoS) attributes, permitted services and online charging control.

Where a subscriber's policy includes online charging control, the database 114 is further populated with information relating to the subscriber's charging limitations, for example, usage limitations for a given time period, spending limits for a given time period, prepaid credit balance, limitations of packages. However, in an alternative embodiment, information relating to the subscriber's charging limitations and requirements is stored in the charging system 112 or in a charging database connected to the charging system 112.

The policy manager 110 provides policy provisioning to the access gateway for a session instigated by a subscriber at the terminal. The policy manager 110 comprises a rules database 110a for storing policy regulations and a policy interface 110b to enable communication between the policy manager 110 and the access gateway 106 for the IP access network 102. The policy interface 110b is preferably implemented using Diameter, COPS, or RADIUS protocols. However, it will be appreciated that any suitable protocol may be employed.

In the preferred embodiment, as illustrated in Fig. 1, a trigger interface 110c is provided to enable the policy manager 110 to trigger events to the charging system 112.

Similarly, the charging system 112 comprises a trigger interface 112a for enabling the charging system 112 to receive events triggered by the policy manager 110, and for the charging system 112 to acknowledge receipt of the triggered events.

In the preferred embodiment, the trigger interface 112a and the trigger interface 110c are implemented using a Telco grade low latency protocol such as Diameter.

The charging system 112 also comprises a charging interface 112b to enable communication between the charging system and the access gateway 106 for the IP access network 102. The charging interface 112b is preferably implemented using Diameter, COPS, or RADIUS protocols. However, it will be appreciated that any suitable protocol may be employed.

The charging system 112 further comprises a rating device 112d and balance manager 112e for enabling transaction management, rating and account balance management of subscriber balances and a cache 112c for storing information retrieved from the database 114 or the balance manager 112e.

In the preferred embodiment, the triggered event supplied to the control system at trigger interface 112a comprises a subscriber identifier. However, it will be appreciated that the event may comprise any combination of the following data: a subscriber identifier, for example, IMSI, MSISDN, username; subscription ID; service information session information; billing information, online or offline; QoS profile information; and/or bearer information.

However, in the preferred embodiment, on receipt of a triggered event at the trigger interface 112a from the policy manager 110, the cache 112c is populated pre-emptively with subscriber information retrieved from the database 114, or balance manager 112e, utilising a subscriber identifier decoded from the triggered event, thereby enhancing system performance and user experience by reducing an average latency associated with real time credit control during service deliveries. It will however be appreciated that the cache 112c may be pre-emptively populated with information in response to stimuli from any external device.

In the preferred embodiment, the cache is pre-emptively loaded with the subscriber's account balance information. However, it will be appreciated that the cache may be loaded with any combination of the following information: a balance or set of balances associated with the subscriber obtained from the balance manager 112d or the database 114; a set of costs for the subscriber's services obtained from the rating component 112d; a set of tariffs for the subscriber's services obtained from the rating component 112d; subscriber related data obtained from the database 114.

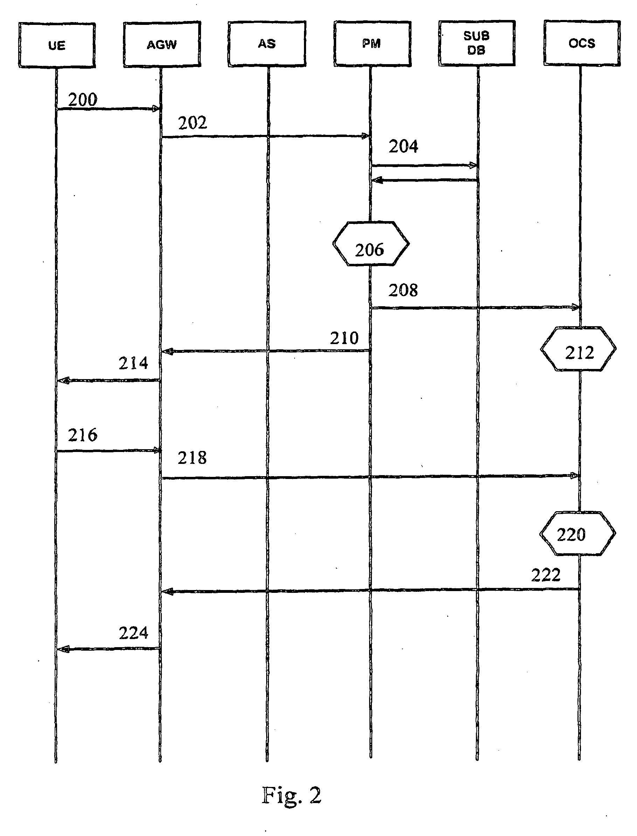

Referring now to Fig. 2, there is illustrated an access gateway initiated message flow according to the preferred embodiment of the present invention.

A user at a terminal employs IP enabled user equipment (UE) 104 to connect to the network by sending 200 a connect request to the access gateway (AGW) 106. In the preferred embodiment, the connect request comprises information identifying the subscriber associated with the user terminal, and a destination network to which the user wished to connect.

The access gateway 106 processes the request and requests 202 policy regulations for the subscriber associated with the terminal from the policy manager (PM) 110.

The policy manager 110 retrieves 204, policy information from the subscriber database (SUB DB) 114. In the preferred embodiment, the policy information comprises an indication of whether an online charging control facility is applicable to the subscriber.

Based on the retrieved policy information, the policy manager 110 composes 206 policy regulations associated with the subscriber.

In the preferred embodiment, if the policy information retrieved indicates that the online charging control facility is activated for the subscriber, an event is triggered 208 to the control system (OCS) 112. In the preferred embodiment, the event triggered to the control system 112 comprises subscriber information and in particular, subscriber identification. However, it will be appreciated that in an alternative embodiment, an event is triggered to the control system 112 independently of whether the policy information retrieved comprises any indication regarding online charging control.

The policy manager 110 provides 210 the access gateway with the policy regulations relating the to subscriber.

In response to the event triggered by the policy manager 110, the control system 112 pre-emptively retrieves or pre-fetches charging information relating to the identified subscriber from the subscriber database 114 and stores 212 the charging information in cache 112c.

The access gateway 106 sends 214 a connect response to the user at the user equipment 104 indicating whether the request was permitted or denied.

If the connect request was permitted, the subscriber subsequently attempts to access a telecommunications service by sending 216 a service request to the access gateway 106.

In the preferred embodiment, the access gateway 106 determines whether the online charging control facility is applicable to the subscriber and sends 218 an authorisation request to the charging system 112 to ascertain whether the service request is permitted. However, it will be appreciated that in an alternative embodiment, the access gateway 106 does not perform a determination in order to assess whether the subscriber is applicable for online charging control.

The control system 112 consults 220 the charging information relating to the subscriber stored in the cache 112c and processes the request.

The control system 112 then responds 222 to the access gateway 106 indicating that authorisation is permitted or denied.

The access gateway 106 then responds 224 accordingly to the user's service request.

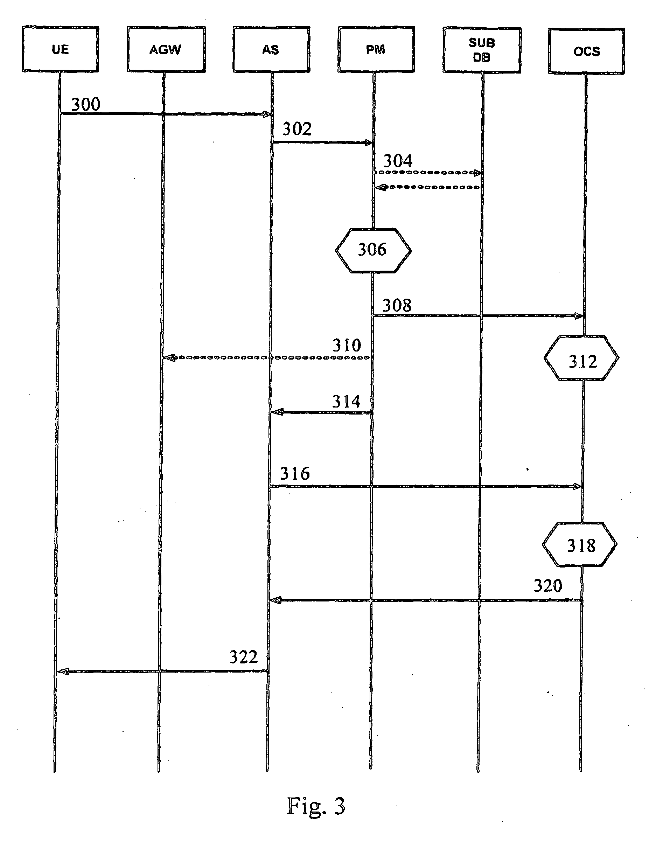

Referring now to Fig. 3, there is illustrated an application server initiated message flow according to the preferred embodiment of the present invention.

The user at the terminal employs IP enabled user equipment 104 to send 300 an application start request to an application server (AS) 108 across the network in order to access an application. For example, the subscriber may wish to initiate a video conferencing session.

In response, the application server 108 triggers 302 a policy notification to the policy manager 112. For example, the policy notification may comprise a notification that a higher QoS is required in order to enable the video conferencing session.

In the preferred embodiment, the policy manager 110 retrieves 304 policy information from the subscriber database 114, for example, to ascertain whether the subscriber is entitled to an improved QoS rating. However, it will be appreciated that this step is not essential to the present invention.

The policy manager adapts 306 the policy regulations for the subscriber based on the policy notification received from the application server 108. In the above example, the policy regulations are adapted to associate the subscriber with a higher quality of service.

The policy manager triggers 308 an event to the control system 112 identifying the subscriber at the terminal.

Optionally, the policy manager 110 provides 310 the access gateway with the updated policy regulations relating to the subscriber.

In response to receipt of the event from the policy manager, the control system 112 pre-emptively loads 312 the cache 112c with information relating to the identified subscriber. In the preferred embodiment, the information is pre-fetched from the database 114.

The policy manager acknowledges 314 the notification from the application server 108.

The application server 108 determines that online charging control is applicable to the subscriber and sends 316 an authorisation request to the control system 112.

The control system 112 processes 318 the request and sends 320 a response to the application server 108 indicating that authorisation is permitted or denied.

The application server 108 then responds 322 accordingly to the user's application start request.

The invention is not limited to the embodiment(s) described herein but can be amended or modified without departing from the scope of the present invention.

## Claims

1. A method for charging control in a communications network, the method comprising the steps of:
at a policy manager (110),
receiving (202, 302) a request for policy regulations for a subscriber,
at the control system (112),
responsive to a stimulus, retrieving subscriber information; and
storing (212, 312) said information in a cache (112c);
**characterised by**:
at the policy manager (110),
responsive to the request (202, 302) for policy regulations for a subscriber, providing (208, 308) the stimulus to the control system (112) to trigger the control system (112) to pre-emptively retrieve subscriber information, the stimulus being provided to the control system (112) in advance of the control system (112) receiving (218, 316) a subsequent authorisation request for the subscriber; and
at the control system (112),
responsive to receiving (218, 316) the authorization request from an access gateway, AGW, (106) or application server, AS, (108), consulting (220, 318) said subscriber information in said cache to determine charging information; and
providing (222, 320) a response to said AGW (106) or AS (108) based on said charging information.

2. The method of claim 1, wherein said providing a stimulus (208, 308) to a control system comprises sending a subscriber identifier to said control system.

3. The method according to claim 2, wherein said step of retrieving subscriber information comprises prefetching charging information associated with the subscriber identifier from a database.

4. The method according to claim 3, further comprising the step of:
at said policy manager (110),
retrieving (204, 304) policy information from a database (114);
composing (206, 306) policy regulations for said subscriber; and
provisioning (210, 310) said policy regulations.

5. The method according to claim 4, further comprising the step of:
at the policy manager (110),
responsive to a notification from the AS (108), adapting (306) said policy regulations associated with said subscriber.

6. The method according to claim 4, further comprising the step of:
at the policy manager (110),
responsive to a notification from the AS (108), querying (304) said subscriber information;
responsive to said notification complying with subscriber information, adapting (306) said policy regulations accordingly.

7. The method of claim 6 wherein said policy information comprises roaming preferences, network preferences, content filtering, charging class, quality of service (QoS) attributes, permitted services and/or online charging control.

8. A system (100) for charging control in a communications network, the system comprising:
a policy manager (110); and
a control system (112) comprising a cache (112c);
wherein the policy manager (110) is arranged to receive a request for policy regulations for a subscriber; and
wherein the control system (112) is arranged to retrieve subscriber information in response to a stimulus, and store (212, 312) said information in the cache (112c),
**characterised in that**:
in response to a request for policy regulations for a subscriber, the policy manager (110) is arranged to provide (208, 308) the stimulus to the control system (112) to trigger the control system (112) to pre-emptively retrieve subscriber information, the stimulus being provided to the control system (112) in advance of the control system (112) receiving (218, 316) a subsequent authorization request for the subscriber; and
in response to the authorisation request from an access gateway, AGW, (106), or
applications server, AS, (108), the control system (112) is arranged to consult (220, 318) said subscriber information in said cache to determine charging information; and provide (222, 320) a response to said AGW, (106) or AS (108), based on said consultation.

9. The system according to claim 8, wherein said control system (112) further comprises a balance manager (112e) arranged to manage an account balance associated with said subscriber.

10. The system according to claim 9, further comprising a database (114) in communication with said control system (112) and said policy manager (110) and which is arranged to store subscriber information.

## Patentansprüche

1. Verfahren zur Gebührenberechnungssteuerung in einem Kommunikationsnetz, wobei das Verfahren die folgenden Schritte beinhaltet:
an einem Richtlinienmanager (110):
Empfangen (202, 302) einer Anforderung für Richtlinienbestimmungen fiir einen Teilnehmer,
am Steuersystem (112):
Abrufen von Teilnehmerinformationen als Reaktion auf einen Impuls; und
Speichern (212, 312) der genannten Informationen in einem Cache (112c);
**gekennzeichnet durch**:
am Richtlinienmanager (110):
Anlegen (208, 308), als Reaktion auf die Anforderung (202, 302) von Richtlinienbestimmungen für einen Teilnehmer, des Impulses an das Steuersystem (112), um das Steuersystem (112) zu veranlassen, präventiv Teilnehmerinformationen abzurufen, wobei der Impuls an das Steuersystem (112) angelegt wird, bevor das Steuersystem (112) eine nachfolgende Autorisierungsanforderung für den Teilnehmer empfängt (218, 316); und
am Steuersystem (112):
Konsultieren (220, 318), als Reaktion auf den Empfang (218, 316) der Autorisierungsanforderung von einem Access-Gateway AGW (106) oder einem Applikationsserver AS (108), der genannten Teilnehmerinformationen in dem genannten Cache, um Gebührenberechnungsinformationen zu bestimmen; und
Übermitteln (222, 320) einer Reaktion zu dem genannten AGW (106) oder AS (108) auf Basis der genannten Gebührenberechnungsinformationen.

2. Verfahren nach Anspruch 1, wobei das genannte Anlegen eines Impulses (208, 308) an ein Steuersystem das Senden einer Teilnehmerkennung zu dem genannten Steuersystem beinhaltet.

3. Verfahren nach Anspruch 2, wobei der genannte Schritt des Abrufens von Teilnehmerinformationen das Vorabrufen von Gebührenberechnungsinformationen in Verbindung mit der Teilnehmerkennung aus einer Datenbank beinhaltet.

4. Verfahren nach Anspruch 3, das ferner die folgenden Schritte beinhaltet:
an dem genannten Richtlinienmanager (110):
Abrufen (204, 304) von Richtlinieninformationen aus einer Datenbank (114);
Zusammenstellen (206, 306) von Richtlinienbestimmungen für den genannten Teilnehmer; und
Bereitstellen (210, 210) der genannten Richtlinienbestimmungen.

5. Verfahren nach Anspruch 4, das ferner den folgenden Schritt beinhaltet:
am Richtlinienmanager (110):
Anpassen (306), als Reaktion auf eine Mitteilung vom AS (108), der genannten Richtlinienbestimmungen in Verbindung mit dem genannten Teilnehmer.

6. Verfahren nach Anspruch 4, das ferner die folgenden Schritte beinhaltet:
am Richtlinienmanager (110):
Abfragen (304), als Reaktion auf eine Mitteilung vom AS (108), der genannten Teilnehmerinformationen;
entsprechendes Anpassen (306), als Reaktion auf die genannte Mitteilung im Einklang mit Teilnehmerinformationen, der genannten Richtlinienbestimmungen.

7. Verfahren nach Anspruch 6, wobei die genannten Richtlinieninformationen Roaming-Präferenzen, Netzwerkpräferenzen, Inhaltsfilterung, Gebührenberechnungsklasse, QOS-(Quality of Service)-Attribute, zulässige Dienste und/oder Online-Gebührenberechnungssteuerung beinhalten.

8. System (100) zur Gebührenberechnungssteuerung in einem Kommunikationsnetz, wobei das System Folgendes umfasst:
einen Richtlinienmanager (110); und
ein Steuersystem (112), das einen Cache (112c) umfasst,
wobei der Richtlinienmanager (110) die Aufgabe hat, eine Anforderung von Richtlinienbestimmungen fiir einen Teilnehmer zu empfangen; und
wobei das Steuersystem (112) die Aufgabe hat, Teilnehmerinformationen als Reaktion auf einen Impuls abzurufen und die genannten Informationen im Cache (112c) zu speichern (212, 312), **dadurch gekennzeichnet, dass**:
der Richtlinienmanager (110) die Aufgabe hat, als Reaktion auf eine Anforderung von Richtlinienbestimmungen für einen Teilnehmer den Impuls an das Steuersystem (112) anzulegen (208, 308), um das Steuersystem (112) zu veranlassen, Teilnehmerinformationen präventiv abzurufen, wobei der Impuls an das Steuersystem (112) angelegt wird, bevor das Steuersystem (112) eine nachfolgende Autorisierungsanforderung für den Teilnehmer empfängt (218, 316); und
das Steuersystem (112) die Aufgabe hat, als Reaktion auf die Autorisierungsanforderung von einem Access-Gateway AGW (106) oder von einem Applikationsserver AS (108) die genannten Teilnehmerinformationen in dem genannten Cache zu konsultieren (220, 318), um Gebührenberechnungsinformationen zu ermitteln; und auf der Basis der genannten Konsultation eine Reaktion zu dem genannten AGW (106) oder AS (108) zu übermitteln (222, 320).

9. System nach Anspruch 8, wobei das genannte Steuersystem (112) ferner einen Bilanzmanager (112e) mit der Aufgabe umfasst, ein Kontosaldo in Verbindung mit dem genannten Teilnehmer zu verwalten.

10. System nach Anspruch 9, das ferner eine Datenbank (114) in Kommunikation mit dem genannten Steuersystem (112) und dem genannten Richtlinienmanager (110) umfasst, die Teilnehmerinformationen speichert.

## Revendications

1. Un procédé de contrôle de la facturation dans un réseau de communications, le procédé comprenant les opérations suivantes :
sur un gestionnaire de contrat (110),
la réception (202, 302) d'une demande de règles contractuelles pour un abonné,
sur le système de commande (112),
en réponse à un stimulus, la récupération d'informations d'abonné, et
la mise en mémoire (212, 312) desdites informations dans une mémoire tampon (112c),
**caractérisé par** :
sur le gestionnaire de contrat (110),
en réponse à la demande (202, 302) de règles contractuelles pour un abonné, la fourniture (208, 308) du stimulus au système de commande (112) de façon à amener le système de commande (112) à récupérer de manière préemptive des informations d'abonné, le stimulus étant fourni au système de commande (112) avant la réception (218, 316) par le système de commande (112) d'une demande d'autorisation subséquente pour l'abonné, et
sur le système de commande (112),
en réponse à la réception (218, 316) de la demande d'autorisation provenant d'une passerelle d'accès, AGW, (106) ou d'un serveur d'applications, AS, (108),
la consultation (220, 318) desdites informations d'abonné dans ladite mémoire tampon de façon à déterminer des informations de facturation, et
la fourniture (222, 320) d'une réponse à ladite AGW (106) ou audit AS (108) en fonction desdites informations de facturation.

2. Le procédé selon la Revendication 1, où ladite fourniture d'un stimulus (208, 308) à un système de commande (112) comprend l'envoi d'un identifiant d'abonné audit système de commande.

3. Le procédé selon la Revendication 2, où ladite opération de récupération d'informations d'abonné comprend la pré-extraction d'informations de facturation associées à l'identifiant d'abonné d'une base de données.

4. Le procédé selon la Revendication 3, comprenant en outre les opérations suivantes :
sur ledit gestionnaire de contrat (110),
la récupération (204, 304) d'informations contractuelles d'une base de données (114),
la composition (206, 306) de règles contractuelles pour ledit abonné, et
la mise en place (210, 310) desdites règles contractuelles.

5. Le procédé selon la Revendication 4, comprenant en outre l'opération suivante :
sur le gestionnaire de contrat (110),
en réponse à une notification provenant de l'AS (108), l'adaptation (306) desdites règles contractuelles associées audit abonné.

6. Le procédé selon la Revendication 4, comprenant en outre les opérations suivantes :
sur le gestionnaire de contrat (110),
en réponse à une notification provenant de l'AS (108), l'interrogation (304) desdites informations d'abonné,
en réponse à ladite notification étant conforme aux informations d'abonné, l'adaptation (306) en conséquence desdites règles contractuelles.

7. Le procédé selon la Revendication 6 où lesdites informations contractuelles comprennent des préférences d'itinérance, des préférences de réseau, un filtrage des contenus, une classe de facturation, des attributs de qualité de service (QoS), des services autorisés et/ou un contrôle de la facturation en ligne.

8. Un système (100) de contrôle de la facturation dans un réseau de communications, le système comprenant :
un gestionnaire de contrat (110), et
un système de commande (112) comprenant une mémoire tampon (112c),
où le gestionnaire de contrat (110) est agencé de façon à recevoir une demande de règles contractuelles pour un abonné, et
où le système de commande (112) est agencé de façon à récupérer des informations d'abonné en réponse à un stimulus, et à conserver en mémoire (212, 312) lesdites informations dans une mémoire tampon (112c),
**caractérisé en ce que** :
en réponse à une demande de règles contractuelles pour un abonné, le gestionnaire de contrat (110) est agencé de façon à fournir (208, 308) le stimulus au système de commande (112) de façon à amener le système de commande (112) à récupérer de manière préemptive des informations d'abonné, le stimulus étant fourni au système de commande (112) avant la réception (218, 316) par le système de commande (112) d'une demande d'autorisation subséquente pour l'abonné, et
en réponse à la demande d'autorisation provenant d'une passerelle d'accès, AGW, (106) ou d'un serveur d'applications, AS, (108), le système de commande (112) est agencé de façon à consulter (220, 318) lesdites informations d'abonné dans ladite mémoire tampon de façon à déterminer des informations de facturation, et à fournir (222, 320) une réponse à ladite AGW (106) ou audit AS (108) en fonction de ladite consultation.

9. Le système selon la Revendication 8, où ledit système de commande (112) comprend en outre un gestionnaire de compte (112e) agencé de façon à gérer un solde de compte associé audit abonné.

10. Le système selon la Revendication 9, comprenant en outre une base de données (114) en communication avec ledit système de commande (112) et ledit gestionnaire de contrat (110) et qui est agencée de façon à conserver en mémoire des informations d'abonné.
